# EUROPÄISCHE PATENTSCHRIFT

(11) **EP 0 700 744 B1**
(45) Veröffentlichungstag und Bekanntmachung des Hinweises auf die Patenterteilung: **07.01.1999**
(21) Anmeldenummer: 95112805.7
(22) Anmeldetag: 15.08.1995
(51) Int. Cl.: B23C 5/08, B23C 5/22, B23C 3/30

(54) **Verfahren und Fräswerkzeug zum Herstellen tiefer Nuten, insbesondere in Generator- und Turbinenrotoren**
Making deep grooves for generator and turbine rotors and milling cutter therefor
Fabrication et fraise de rainures profondes, spécialement pour roteur de génératrices et turbines

(30) Priorität: 07.09.1994 DE 4431841
(43) Veröffentlichungstag der Anmeldung: 13.03.1996
(73) Patentinhaber: WALTER AG, D-72072 Tübingen (DE)
(72) Erfinder: Gauss, Roland, D - 72119 Ammerbuch (DE); Vollmer, Rolf, D - 72072 Tübingen (DE)
(74) Vertreter: Rüger, Rudolf, Dr.-Ing.

(56) Entgegenhaltungen:
- EP-A- 0 548 036
- DE-C- 933 365
- DE-U- 8 604 196
- WERKSTATT UND BETRIEB, Bd.113, Nr.5, Mai 1980, MUNCHEN DE Seiten 317 - 318 ANDREOLLI 'BEARBEITUNG VON TURBOGENERATOREN'

## Beschreibung

Die Erfindung betrifft ein Verfahren zum Herstellen tiefer Nuten in metallischen Werkstücken, insbesondere in Generator- und Turbinenrotoren gemäß Oberbegriff von Patentanspruch 1 sowie Fräswerkzeuge zur Herstellung dieser Nuten.

Synchrongeneratoren zur Stromerzeugung werden heute mit Rotoren gebaut, die einen Durchmesser von ca. 2.200 mm und mehr bei einer Gesamtlänge, einschließlich Lagerzapfen von ca. 20.000 mm und mehr haben. Sie werden aus einem Schmiedestück, dem sogenannten Ballen zylindrisch gedreht und anschließend mit über die Rotorlänge durchgehenden parallelen Längsnuten versehen, die zur Aufnahme der Erregerwicklung und von Kühlkanälen und -einrichtungen zur Wicklungskühlung dienen. Diese Rotornuten haben bei den vorgenannten Rotorabmessungen beispielsweise eine Tiefe von ca. 220 mm bei einer Nutbreite an der breitesten Stelle von ca. 40 mm. Sie können bis zum Nutengrund parallelflankig begrenzt sein oder stufenförmig ausgebildet sein, wobei die einzelnen Stufen vom Umfang ausgehend zur Rotorachse hin ein jeweils kleineren Durchmesser aufweisen. Abgesehen davon sind auch Ausführungsformen bekannt, bei denen die Rotornuten zumindest abschnittsweise eine im wesentlichen V-förmige Profilform aufweisen. Bedingt sind diese Nutformen durch elektrische Erfordernisse und Überlegungen, die sich aus der Notwendigkeit einer gleichmäßigen Abfuhr der in der Wicklung auftretenden Verlustwärme ergeben. Da die mit elektrischem Isolationsmaterial umgebenen Spulenseiten der Wicklung einerseits mechanisch sehr empfindlich sind, andererseits ein exakter engtolerierter spielfreier Sitz der Nutenseiten in den Rotornuten gewährleistet sein muß, müssen die Rotornuten wenigstens in den Abschnitten, die für die Aufnahme der Spulenseiten bestimmt sind, entsprechend engtoleriert und mit glatter feinbearbeiteter Oberflächenqualität hergestellt werden.

Die Rotornuten werden aus dem zylindrisch vorgedrehten Rotorkörper unter Verwendung sogenannter Rotornutenfräser ausgefräst, das sind Scheibenfräser, die speziell für diese Zwecke ausgelegt sind. Dabei wird in der Praxis derart vorgegangen, daß in einer Mehrzahl aufeinanderfolgender Schnitte die Rotornuten auf die unterschiedlichen Stufen in verschiedenen Arbeitsgängen zunächst grob bearbeitet, d.h. geschruppt und anschließend fein bearbeitet, d.h. geschlichtet, wurden. Die Durchführung der Schrupp- und der Schlichtarbeiten erfolgte mit eigenen Schrupp- und Schlichtfräswerkzeugen, die ausschließlich auf den jeweiligen Schrupp- oder Schlicht-Arbeitsgang hin ausgelegt sind. Typischerweise wurde die Rotornut zunächst in einer ersten Operation auf die Tiefe einer ersten Stufe mit einem wendeplattenbestückten Schrupp-Scheibenfräser vorgefräst, so dann wurde unter Verwendung eines anderen Werkzeuges in einem zweiten Schnitt mit einem wendeplattenbestückten Schlicht-Scheibenfräser die bearbeitete Werkstückfläche in der ersten Stufe geschlichtet. Darauffolgend wurde wieder das Werkzeug ausgetauscht und mit einem weiteren Werkzeug eine zweite Stufe mit einem wendeplattenbestückten Schrupp-Scheibenfräser vorgefräst, anschließend nach Austausch des Werkzeuges mit einem vierten Werkzeug in Form eines wendeplattenbestückten Schlicht-Scheibenfräsers die zweite Stufe fertiggeschlichtet, woran sich die Bearbeitung der dritten Stufe in der gleichen Weise anschloß, bei der - wenn es lediglich um den Kühlkanal handelte - auf die Schlichtoperation häufig verzichtet wurde.

Bei parallelflankigen Nuten ohne Kühlkanal war der Arbeitsaufwand etwas geringer, doch wurde auch hier in einer ersten Stufe zunächst etwa auf die halbe Nutentiefe mit einem Schrupp-Fräser vorgefräst, anschließend in einem zweiten Schnitt, die bis zum endgültigen Nutenboden reichende zweite Stufe mit einem anderen Werkzeug fertiggefräst und schließlich in einem dritten Schnitt mit einem eigenen Schlichtwerkzeug die Schlichtoperation vorgenommen.

Diese aus WERKSTATT UND BETRIEB. Bd. 113, NR.5, Mai 1980, München, Seiten 317 - 318, ANDREOLLI; "Bearbeitung von Turbogeneratoren" bekannte Art der Herstellung der Rotornuten bedingt zum einen die Notwendigkeit, eine Mehrzahl unterschiedlicher Scheibenfräser bereitzuhalten und den dadurch gegebenen Kostenaufwand in Kauf zu nehmen. Immerhin haben solche Scheibenfräser typischerweise einen Durchmesser zwischen 800 und etwa 1.100 mm bei einer Schneidbreite von ca. 25 bis 50 mm. Außerdem ergibt sich eine verhältnismäßig lange Bearbeitungszeit mit großen Nebenzeiten, die von dem mehrmaligen Werkzeugwechsel herrühren und durch mehrmalige Teilungsvorgänge des Werkstückes bedingt sind.

Aufgabe der Erfindung ist es, hier abzuhelfen und einen Weg zu weisen, der es gestattet mit geringerem Zeit- und Werkzeugaufwand einwandfreie Rotornuten herzustellen.

Zur Lösung dieser Aufgabe werden bei dem erfindungsgemäßen Verfahren die Nuten in lediglich zwei Schnitten ausgefräst, wobei bei jedem Schnitt gleichzeitig eine Schrupp- und eine Schlichtbearbeitung unter Verwendung nur eines einzigen Fräswerkzeuges vorgenommen wird, das Schrupp- und Schlichtschneiden trägt, d.h. mit anderen Worten bei jedem Schnitt wird gleichzeitig vor- und fertiggefräst (geschruppt und geschlichtet). Ein erfindungsgemäßes Fräswerhzeug besitzt die Merkmale gemäß Patentanspruch 3.

Bei den weitverbreiteten Rotornuten mit zwei Stufen geringfügig unterschiedlicher Breite über die Nutenhöhe und am Nutenboden anschließendem schmäleren Kühlkanal genügen bei diesem Verfahren lediglich zwei verschiedene Werkzeuge. In einem ersten Schnitt wird die erste Stufe gleichzeitig vorgefräst (geschruppt) und an den Nutenseitenwänden geschlichtet; in einem daran anschließenden zweiten Schnitt werden gemeinsam die zweite Stufe und der eine dritte Stufe bildende Kühlkanal, d.h. das ganze gestufte Nutenprofil gleichzeitig geschruppt und geschlichtet.

Da nunmehr lediglich zwei verschiedene Werkzeuge für die Erzeugung der ganzen Nut zum Einsatz kommen, ergibt sich im Vergleich zu dem eingangs geschilderten Stand der Technik eine wesentlich geringere Bearbeitungszeit durch die von der Verringerung der Zahl der Schnitte auf lediglich zwei herrührende Einsparungen von Hauptzeiten und die Verkürzung der Nebenzeiten als Folge der Verringerung der Zahl der Werkzeugwechsel und der Teilungsvorgänge. Außerdem arbeiten bei dem neuen Verfahren die beiden Scheibenfräser in Vorschubrichtung immer ins Volle, so daß die zwischen benachbarten Rotornuten ausgebildeten, verhältnismäßig dünnen Stege (Zähne) nicht zu Schwingungen angeregt werden können, die zur Maßungenauigkeiten und schlechter Oberflächengüte führen würden. Bei den bekannten Verfahren, bei denen die Nutenseitenwände erst nach der Schruppbearbeitung geschlichtet werden, findet demgegenüber die Schlichtbearbeitung an den bereits freistehenden dünnwandigen Stegen statt, was erfahrungsgemäß Schwingungs- und Maßprobleme mit sich brachte. Zur Abhilfe mußten die Stege durch eingebrachte Keile abgestützt werden.

Die Herstellung von Nuten mit abschnittsweise V-förmigem Nutenprofil erfolgt in entsprechender Weise, wobei der Profilgestalt durch die entsprechende Auslegung des Werkzeuges Rechnung getragen wird. Davon abgesehen ist das neue Verfahren auch nicht auf die Herstellung von Rotornuten beschränkt; es kann immer dann Verwendung finden, wenn es darum geht, sehr tiefe Nuten hoher Oberflächenqualität über große Werkstücklängen in metallischen Werkstücken zu erzeugen.

Die beiden vorerwähnten zur Durchführung des neuen Verfahrens eingerichteten Fräswerkzeuge sind jeweils in Gestalt eines wendeplattenbestückten Scheibenfräsers mit einem kreisscheibenförmigem Werkzeugkörper ausgebildet, der im Vergleich zu bekannten Scheibenfräsern dieser Art größere und tiefere Spanraumausnehmungen aufweist, die die bei der Bearbeitung über die ganze Schnittbogenlänge anfallenden Späne aufnehmen können. Dies gilt insbesondere für den vorerwähnten zweiten Scheibenfräser zur Erzeugung der zweiten und dritten Stufe des Nutenprofils.

Ähnlich wie bei bekannten Rotornutenfräsern sind bei den erfindungsgemäßen Scheibenfräsern Kassetten vorgesehen, die jeweils mit in Sitzen aufgenommenen Wendeschneidplatten bestückt sind und die im Bereiche der Spanräume lagegenau an dem Werkzeugkörper befestigt sind.

Dabei ist die Schnittbreite auf die Hauptschneiden der Wendeschneidplatten wenigstens zweier in Drehrichtung aufeinanderfolgend angeordneter Kassetten mit unterschiedlicher Wendeplattenbestückung aufgeteilt und die Anordnung erfindungsgemäß derart getroffen, daß die die Schnittbreite begrenzenden Wendeschneidplatten wenigstens einer dieser Kassetten anschließend an die Hauptschneide jeweils eine axial nach außen weisende Nebenschneide aufweisen, derart, daß durch die Haupt- und Nebenschneiden der Wendeschneidplatten dieser Kassetten eine komplette Schrupp- und Schlichtschneide gebildet ist.

Durch Austausch der Kassetten können die Schnittbreite und die in der Nut zu erzeugende Stufentiefe bedarfsgemäß verändert werden. Damit ergibt sich ein Baukastensystem, das den Vorteil mit sich bringt, daß die Zahl der vorzuhaltenden unterschiedlichen Werkzeugkörper auf ein Minimum reduziert ist.

Die Kassetten sind an dem Werkzeugkörper mit Vorteil jeweils radial formschlüssig in einer nutförmigen Ausnehmung des Werkzeugkörpers aufgenommen und in dieser radial abgestützt. Die Abstützung der Kassetten in radialer Richtung ergibt eine zusätzliche Absicherung der Kassetten gegen Kippen, wobei die endseitige Aufnahme in der nutförmigen Ausnehmung die Absicherungswirkung noch unterstützt.

Um eine einwandfreie Führung der Kassetten an dem Werkzeugkörper in axialer Richtung zu gewährleisten und damit aufwendige Justiermaßnahmen zu erübrigen, ist es zweckmäßig, wenn die Kassetten an dem Werkzeugkörper in axialer Richtung formschlüssig mittels einer an ihrer Rückseite ausgebildeten Nut und einem in diese eingreifenden Steg des Werkzeugkörpers geführt sind. Die paßgenaue Ausführung von Kassetten- und Werkzeugkörper erlaubt damit einen Kassettenwechsel ohne zusätzliche Einstell- oder Justagearbeiten. Gleichzeitig erlaubt es diese Ausbildung der Kassetten und deren Befestigung praktisch beliebig große Spanraumausnehmungen am Werkzeugkörper vorzusehen, die, wie bereits erläutert, im Hinblick auf die anfallenden langen Späne von Bedeutung sind. In einer bevorzugten Ausführungsform sind die Kassetten an dem Werkzeugkörper jeweils mittels einer im wesentlichen tangential zu dem Werkzeugkörper verlaufenden Kopfschraube befestigt, die etwa im Gegensatz zu den bisher üblichen Keilspanneinrichtungen weniger Einbauteile erfordert und einen einfachen Kassettenwechsel erlaubt.

Die Anordnung und die Schneidengeometrie der Wendeschneidplatten der Kassetten sind so gewählt, daß sich ein Kräfteausgleich in axialer Richtung ergibt. Dies führt zu einer guten Laufruhe des Fräswerkzeuges und damit zu einer höheren Oberflächengüte bei hoher Maßgenauigkeit. Praktisch wird dies dadurch verwirklicht, daß von am Werkzeugkörper aufeinanderfolgenden Kassetten eine Kassette, bezogen auf die Schnittbreite, eine mittig angeordnete Wendeschneidplatte - oder Wendeschneidplattengruppe - trägt und wenigstens eine andere Kassette mit paarweise axial symmetrisch angeordneten Wendeschneidplatten bestückt ist. Dabei ist es von Vorteil, wenn zumindest die mittige Wendeschneidplatte (bzw. Wendeschneidplattengruppe) in im wesentlichen tangential zum Umfang des Werkzeugkörpers ausgerichteter Einbaulage angeordnet ist. Diese tangentiale Einbaulage erlaubt es, sehr hohe Schnittkräfte aufzunehmen und damit ein entsprechend großes Zerspanungsvolumen zu erreichen, wie es insbesondere für die Vorfräs- oder Schrupparbeiten von Bedeutung ist. Die Wendeschneidplatten der anderen Kassette können ebenfalls in im wesentlichen tangential zum Werkzeugkörper ausgerichteter Einbaulage angeordnet sein, wobei sie dann im Bereiche ihrer axial außenliegenden Schmalseiten die Nebenschneiden tragen, die die Schlichtbearbeitung der Nutenseitenwände übernehmen.

Eine solche tangentiale Wendeschneidplattenanordnung kommt insbesondere für das Fräswerkzeug zum Herstellen der ersten Stufe der Rotornuten in Frage. Die Nebenschneiden der endständigen Wendeschneidplatten sind freigestellt. Dazu sind diese Wendeschneidplatten mit einem von 0° abweichenden axialen Einstellwinkel eingebaut (zwischen ca. 5° - 10°).

Insbesondere für das Fräswerkzeug zum Erzeugen der zweiten und gegebenenfalls dritten Stufe der Rotornuten ist es von Vorteil, wenn die beiden endständigen Wendeschneidplatten jeweils in im wesentlichen radial zum Werkzeugkörper ausgerichteter Einbaulage angeordnet sind. Auf diese Weise läßt sich eine verhältnismäßig große Länge der wirksamen Nebenschneiden erzielen, wobei die Anordnung zweckmäßigerweise derart getroffen ist, daß bei am Werkzeugkörper aufeinanderfolgenden Kassetten eine Kassette seitlich arbeitende Haupt- oder Schruppschneiden und die nachfolgende Kassette zusätzlich seitlich arbeitende Neben- oder Schlichtschneiden aufweist.

Die Wendeschneidplatten können im übrigen an der Freifläche der Nebenschneide einen an die Nebenschneide anschließenden Bereich mit einem Freiwinkel aufweisen, der kleiner ist, als der Freiwinkel des zur Grundfläche der Wendeschneidplatte hin sich anschließenden Bereiches. Durch diese sogenannte Beruhigungs- oder 0°-Fase an der Freifläche der Nebenschneide ergibt sich ein Beruhigungseffekt und damit eine bessere Laufruhe und höhere Oberflächengüte.

Schließlich ist es von Vorteil, wenn die nutenseitenflächenerzeugenden Wendeschneidplatten jeweils mit einem an die Nebenschneide sich anschließenden Radius ausgebildet sind, so daß sich durch die definierte Nebenschneide eine sehr gute Oberflächengüte ergibt.

Weitere Ausgestaltungen dieser Fräswerkzeuge sind Gegenstand von Unteransprüchen.

In der Zeichnung sind Ausführungsbeispiele des Gegenstandes der Erfindung dargestellt. Es zeigen:
Fig. 1 einen typischen Rotor eines Drehstromgenerators im Querschnitt und in schematischer Darstellung,
Fig. 2 eine Rotornut des Rotors nach Fig. 1 im Querschnitt und in einem anderen Maßstab,
Fig. 3 ein Fräswerkzeug in Gestalt eines Scheibenfräsers zur Herstellung der zweiten und dritten Stufe der Rotornut nach Fig. 2 in perspektivischer, teilweise schematischer Darstellung,
Fig. 4 einen Ausschnitt aus dem Fräswerkzeug nach Fig. 3 in perspektivischer Darstellung unter Veranschaulichung zweier wendeplattenbestückter aufeinanderfolgender Kassetten in perspektivischer Darstellung und in einem anderen Maßstab,
Fig. 5 die Anordnung nach Fig. 4 mit abgenommenen Kassetten in entsprechender Darstellung,
Fig. 6 das Fräswerkzeug nach Fig. 4 geschnitten längs der Linie VI - VI der Fig. 4 in einer Seitenansicht,
Fig. 7 das Werkzeug nach Fig. 4 in einer idealisierten Ansicht unter Veranschaulichung einer Kassette in einer Seitenansicht entsprechend der Linie VII - VII der Fig. 4, einer vorhergehenden Kassette in der radialen Draufsicht und einer nochmals vorhergehenden Kassette ebenfalls in der radialen Draufsicht,
Fig. 8 eine Einzelheit einer endständigen Wendeschneidplatte des Fräswerkzeugs nach Fig. 6 im Ausschnitt, in einer Seitenansicht und in einer Projektion,
Fig. 9 ein Fräswerkzeug gemäß der Erfindung zur Herstellung der ersten Stufe der Rotornut nach Fig. 1, in einer schematischen Seitenansicht, im Ausschnitt und in einem anderen Maßstab,
Fig. 10 das Fräswerkzeug nach Fig. 9 in einer Schnittdarstellung längs der Linie IX - IX der Fig. 9 und
Fig. 11 das Fräswerkzeug nach Fig. 9 in einer abgewickelten Draufsicht unter Veranschaulichung zweier aufeinanderfolgender Kassetten.

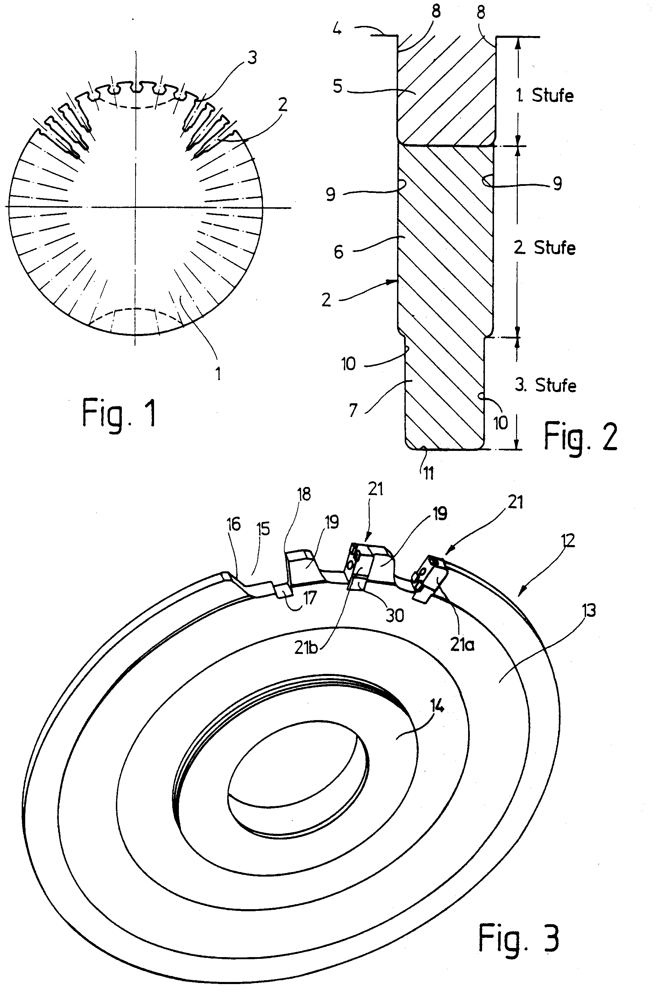

Fig. 1 veranschaulicht einen Querschnitt durch einen typischen Rotor eines Drehstromgenerators. Der zusammen mit den stirnseitig angeformten, in der Zeichnung nicht sichtbaren Wellenzapfen aus einem Stück geschmiedete Rotor 1 ist zylindrisch mit einem Durchmesser von ca. 2.000 mm gedreht und weist eine Gesamtlänge, einschließlich der Wellenzapfen, von bis zu ca. 20.000 mm auf. Er ist an seinem Umfang mit radial gerichteten, parallel zueinander verlaufenden Rotornuten versehen, von denen die tiefen Rotornuten 2 zur Aufnahme der Erregerwicklung bestimmt sind und nach dem erfindungsgemäßen Verfahren eingefräst werden. Die Tiefe dieser Rotornuten beträgt insgesamt ca. 160 bis 220 mm bei einer Breite von ca. 25 bis 50 mm. Die Rotornuten sind im wesentlichen parallelflankig begrenzt und im Querschnitt stufenförmig ausgebildet. In der Nähe des Rotorumfangs sind die Nutenwandungen mit im Querschnitt etwa dreieckförmigen, sogenannten Verschlußnuten 3 ausgebildet, die zur Aufnahme nicht weiter dargestellter leistenförmiger Verschlußelemente, der sogenannten Keile, bestimmt sind. Diese Verschlußnuten 3 sind für die Erfindung ohne Interesse; sie werden in einem eigenen Arbeitsgang hergestellt und sind im folgenden nicht weiter betrachtet. Wie Fig. 2 zeigt, weist jede der Rotornuten 2 ausgehend vom Umfang 4 des Rotors 1 eine erste Stufe 5 vorbestimmter Breite auf, an die sich radial nach innen eine zweite Stufe 6 geringfügig kleinerer Breite anschließt, auf welche ebenfalls radial nach innen eine dritte Stufe 7 folgt, die deutlich schmäler ist und insbesondere als sogenannte Kühlnut dient, während die erste und zweite Stufe 5 bzw. 6 zur Aufnahme der nicht weiter dargestellten Spulenseiten der Erregerwicklung dienen. Die Gesamtnuttiefe von ca. 220 mm teilt sich etwa auf 60 mm für die erste Stufe 5 und 160 mm für die zweite und dritte Stufe 6, 7 auf.

Die Herstellung dieser in den einzelnen Stufen parallelflankig begrenzten Rotornuten 2 geschieht jeweils mittels Scheibenfräsern in zwei aufeinanderfolgenden Schnitten, von denen im ersten Schnitt die erste Stufe 5 mittels lediglich eines einzigen Scheibenfräsers gleichzeitig vorgefräst (geschruppt) und an den einander gegenüberliegenden Nutenseitenwänden 8 feinbearbeitet (geschlichtet) wird, worauf in einem zweiten Schnitt bei so fertig bearbeiteter erster Stufe 5 die zweite und die dritte Stufe 6, 7 mittels eines einzigen zweiten Scheibenfräser gleichzeitig vorgefräst (geschruppt) und im Bereiche der einander gegenüberliegenden Nutenseitenwände 9 bzw. 10 fertiggefräst (geschlichtet) werden. Der Nutenboden 11 braucht lediglich geschruppt zu werden.

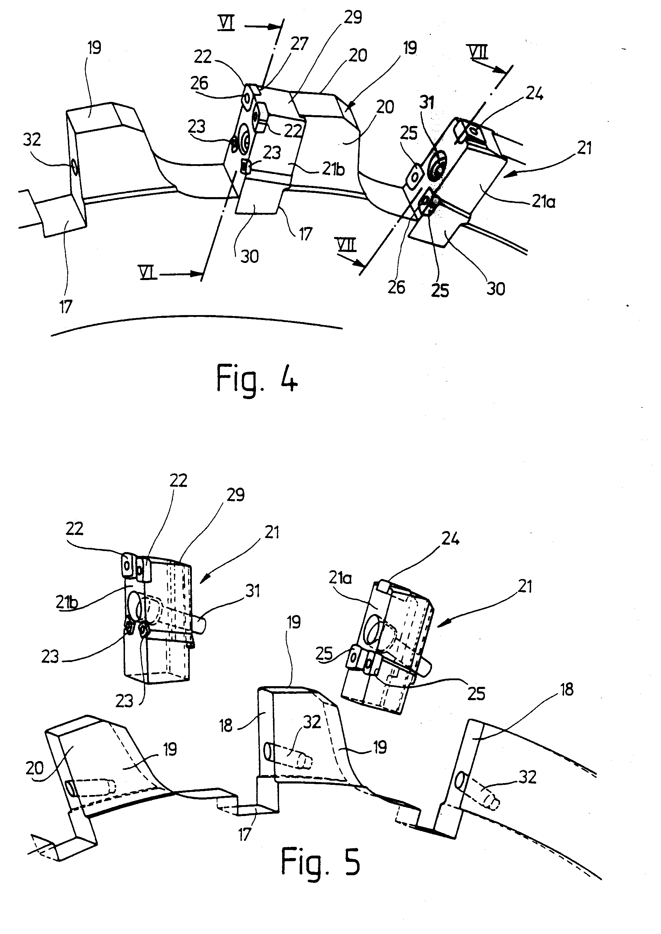

Die zur Durchführung dieser beiden Schnitte verwendeten Scheibenfräser haben einen prinzipiell ähnlichen Aufbau, zu dessen Veranschaulichung in Fig. 3 der Scheibenfräser 12 zur Herstellung der zweiten und dritten Stufe 6, 7 perspektivisch und schematisch dargestellt ist. Der Scheibenfräser 12, dessen Durchmesser zwischen ca. 800 und 1.100 mm liegt, weist einen scheibenförmigen Werkzeugkörper 13 auf, der mit einer bei 14 angedeuteten Nabe ausgebildet ist und an seinem Umfang gleichmäßig verteilt angeordnete Spanraumausnehmungen 15 trägt, von denen in Fig. 3 lediglich drei gezeigt sind. Am Boden der einseitig bei 16 abgeschrägten Spanraumausnehmungen 15 ist jeweils der Schrägfläche 16 gegenüberliegend eine querverlaufende, im Querschnitt etwa rechteckige Nut 17 eingetieft, deren eine Seitenwand sich radial nach außen in einer Anlagefläche 18 eines stegartigen Fortsatzes 19 des Werkzeugkörpers 13 fortsetzt. Jeder der stegartigen Fortsätze 19 liegt jeweils zwischen zwei benachbarten Spanraumausnehmungen 15 und ist, wie aus Fig. 4, 5 hervorgeht, durch zwei parallele Seitenflächen 20 begrenzt, deren Abstand so gewählt ist, daß der Fortsatz 19 in Axialrichtung eine geringere Breite als der die nutartige Vertiefung 17 enthaltende anschließende scheibenförmige Bereich des Werkzeugkörpers 13 aufweist. Jeder der in Achsrichtung symmetrisch zu dem Werkzeugkörper 13 angeordneten Fortsätze 19 bildet somit einen Führungssteg für eine im wesentlichen parallelepipedförmige Kassette 21, die mit Wendeschneidplatten 22, 23 bzw. 24, 25 bestückt ist. Die Wendeschneidplatten 22 bis 25 sind jeweils in entsprechend gestalteten Sitzen genau lagerichtig und maßhaltig aufgenommen, von denen einer für eine Wendeschneidplatte 22 bei 27 in Fig. 4 angedeutet ist. Sie sind an der zugehörigen Kassette 21 mittels Befestigungsschrauben 26 befestigt.

Jeder der Kassetten 21 ist auf ihrer den Wendeschneidplatten 22, 23 bzw. 25 abgewandten Rückseite mit einer über die radiale Höhe eines der stegartigen Fortsätze 19 durchgehenden Nut 29 versehen, die symmetrisch zu der Kassette 21 angeordnet und parallelflankig begrenzt ist. Wie insbesondere aus den Fig. 4, 5 zu ersehen, ist jede Kassette mit ihrer Nut 29 auf einen stegartigen Fortsatz 19 aufgesetzt, wobei sie mit einem unteren verbreiterten Endteil 30, das axial mit den anschließenden Werkzeugkörperteilen fluchtet, in die zugehörige nutartige Vertiefung 17 engtoleriert eingeschoben ist. Zur Befestigung der so eingesetzten Kassette 21 an dem Werkzeugkörper 13 dient jeweils eine durchgehende Zylinderkopfschraube 31, die in eine zugehörige Gewindebohrung 32 in dem Fortsatz 19 eingeschraubt ist. Die Achse der Gewindebohrung 32 verläuft im wesentlichen tangential zu dem Umfang des kreiszylindrischen Werkzeugkörpers 13, wobei sie, wie Fig. 5 zeigt, gegenüber der Umfangsrichtung etwas radial nach innen zu gekippt ist. Dadurch wird erreicht, daß beim Festziehen der Zylinderkopfschraube 31 die Kassette 21 mit dem Boden ihrer Nut 29 einmal gegen die Befestigungsfläche 18 an dem Fortsatz 19 und zum anderen radial nach innen gegen den Boden der nutartigen Vertiefung 17 gedrückt wird und an diesen Flächen satt anliegt. Jede Kassette 21 ist auf diese Weise formschlüssig, sowohl axial als auch radial gegen den Werkzeugkörper 13 abgestützt, wobei die nutartige Vertiefung 17 ein Kippen der Kassette 21 ausschließt.

Die Spanraumausnehmungen 15 sind gegenüber vergleichbaren Scheibenfräsern groß ausgeführt. Ihre Öffnungsweite am Umfang des Werkzeugkörpers 13 in Umfangsrichtung gemessen entspricht etwa der ebenfalls in Umfangsrichtung gemessenen Erstreckung der jeweils anschließenden Kassette 21 und deren zugeordnetem Fortsatz 19. Die radiale Tiefe der Spanraumausnehmung ist etwas größer als die Schnittiefe, der dritten Stufe 7 der zu fräsenden Nut 2.

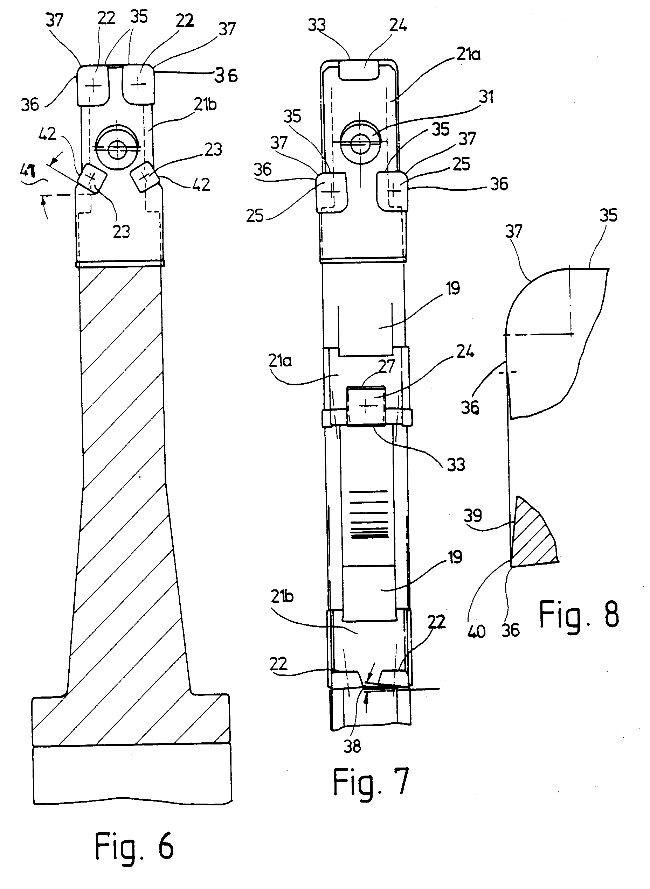

Die Fig. 3 bis 7 zeigen, daß der Werkzeugkörper 13 jeweils aufeinanderfolgend mit Kassetten 21 unterschiedlicher Wendeplattenbestückung ausgerüstet ist. Von jedem dieser Kassettenpaare ist die erste mit 21a bezeichnete Kassette im Bereiche ihres Umfanges mit einer symmetrisch zu ihrer Mittelebene liegenden quadratischen Wendeschneidplatte 24 (Fig. 7) bestückt, die in tangentialer Einbaulage angeordnet und deren Hauptschneide in Fig. 7 mit 33 bezeichnet ist. Die Wendeschneidplatten 24 arbeiten mit negativer Schneidengeometrie und weisen eine parallelepipedförmige Gestalt auf.

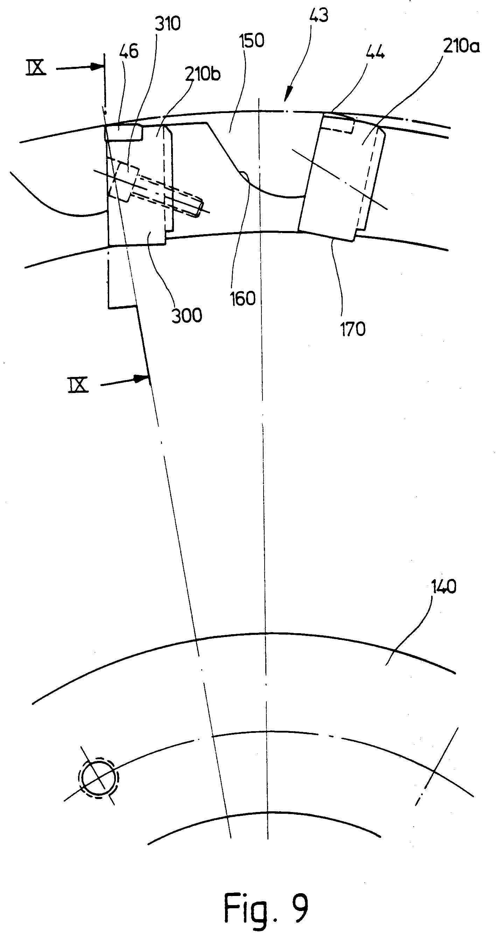

Die andere mit 21b bezeichnete Kassette des Kassettenpaares ist im Bereiche ihres Umfanges mit zwei in der Draufsicht rechteckigen Wendeschneidplatten 22 bestückt, deren am Umfang arbeitende wirksame Hauptschneiden mit 35 in Fig. 6 bezeichnet sind. Die beiden Wendeschneidplatten 22 sind in im wesentlichen radialer Einbaulage angeordnet und weisen jeweils eine seitliche Neben- oder Schlichtschneide 36 auf, die sich an die Hauptschneide 35 über einen Radius 37 (Fig. 8) anschließt.

Die beiden Wendeschneidplatten 22 sind pyramidenstumpfförmig und arbeiten mit positiver Schneidengeometrie. Sie sind, wie Fig. 7 zeigt, mit einem von 0° abweichenden axialen Einstellwinkel 38 (ca. 5° - 10°) eingebaut, derart, daß ihre wirksamen Nebenschneiden 36 in Drehrichtung gegenüber den innenliegenden unwirksamen Nebenschneiden voreilen.

Die Hauptschneiden 33 der mittigen Wendeschneidplatten 24 und die Hauptschneiden 35 der endständigen beiden Wendeschneidplatten 22 überlappen sich somit, so daß sich zusammen mit den Nebenschneiden 36 eine über die Schnittbreite durchgehende Schrupp- und Schlichtschneide ergibt, die beim Einsatz des Werkzeugs die dritte Stufe 7 mit feinbearbeiteten (geschlichteten) Nutenseitenwänden 10 erzeugt.

Zur Erzielung eines Beruhigungseffektes und damit besserer Laufruhe sowie höherer Oberflächengüte an den Nutenseitenwänden 10 (Fig. 2) sind die endständigen Wendeschneidplatten 22 im Bereiche ihrer Freifläche 39 in der aus Fig. 8 zu entnehmenden Weise anschließend an die Nebenschneide 36 mit einer sogenannten Beruhigungs- oder 0°-Fase 40 ausgebildet, in der der Freiwinkel 0° beträgt, während er in dem daran anschließenden Bereich eine Größe von ca. 2 bis 5° aufweist.

Im radialen Abstand von den beiden Wendeschneidplatten 22 ist die Kassette 21b mit zwei symmetrisch bezüglich der Mittelebene angeordneten quadratischen Wendeschneideplatten 23 bestückt, deren axial außen liegende Hauptschneiden 42 axial über die Nebenschneiden 36 der stirnseitigen Wendeschneidplatten 22 vorstehen und die eine Fase am Übergang von der dritten Stufe 7 zum Radius der zweiten Stufe 6 der Nut 2 (Fig. 2) herstellen. Die beiden Wendeschneidplatten 23 sind unter einem Einstellwinkel 41 von etwa 30° in im wesentlichen radialer Einbaulage angeordnet, derart, daß ihre außenliegenden wirksamen Schneidecken radial nach dem Umfang hin gegenüber den innenliegenden unwirksamen Schneidecken versetzt sind.

Den Fasenwendeschneidplatten 23 entsprechen in der Kassette 21a des Kassettenpaares zwei rechteckige Wendeschneidplatten 25, die entsprechend den Wendeschneidplatten 22 gestaltet sind und mit ihrer Hauptschneide 35 und der Schneide an dem anschließenden Radius 37 die Schruppbearbeitung sowie mit ihren wirksamen Nebenschneiden 36 auf beiden Seiten die Schlichtbearbeitung der Nutseitenwände 9 der zweiten Stufe 6 der Rotornut 2 (Fig. 2) übernehmen. Für die Ausbildung ihrer Freifläche 39 gilt das im Zusammenhang mit Fig. 8 Gesagte.

Da die Wendeschneidplatten 24, 22 bzw. 23, 25 jeweils mittig oder paarweise symmetrisch zur Mittelebene des Werkzeugkörpers 13 angeordnet sind, ergibt sich ein axialer Ausgleich der bei der Bearbeitung an den wirksamen Schneiden angreifenden Kräfte. Dies führt bei guter Laufruhe des Werkzeuges dazu, daß sich eine gute Oberflächengüte und hohe Maßgenauigkeit für die Nutenseitenwände 9 bzw. 10 (Fig. 2) ergibt.

Das zur Herstellung der ersten Stufe 5 der Rotornut 2 verwendete Werkzeug in Gestalt des Scheibenfräsers 43 ist, wie bereits erwähnt, grundsätzlich ähnlich dem Scheibenfräser 12 nach Fig. 3 aufgebaut, so daß es genügt, in den Fig. 9 bis 11 lediglich für das Verständnis wesentliche Teile des Scheibenfräsers darzustellen und nur die Merkmale zu erläutern, die unterschiedlich sind.

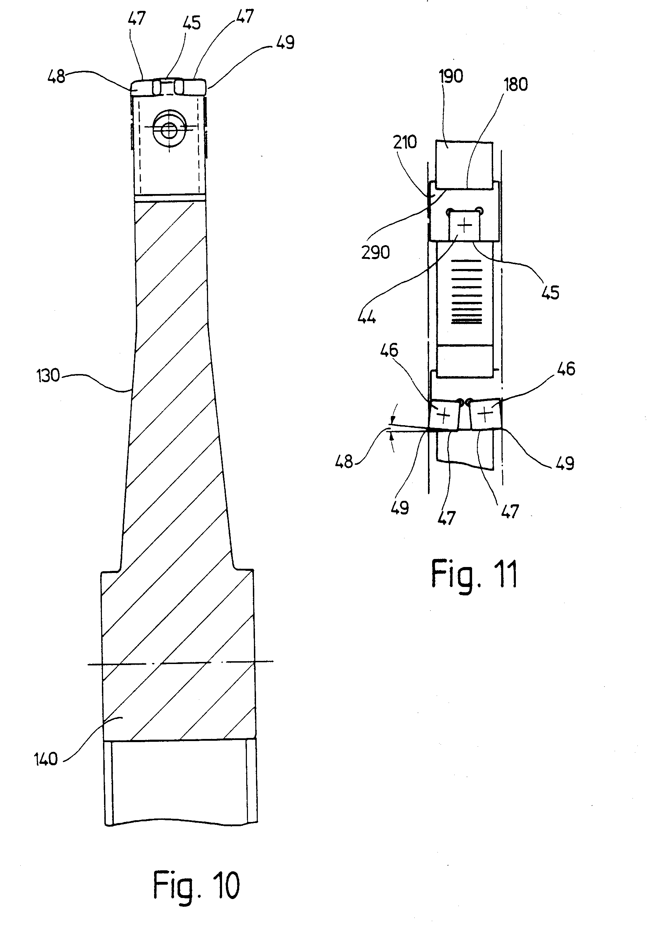

Der kreisscheibenförmige Werkzeugkörper 13O ist wiederum mit einer Nabe 14O versehen und an seinem Umfang mit gleichmäßig verteilt angeordneten Spanraumausnehmungen 15O ausgebildet, die wiederum durch eine schräg liegende, gekrümmte Spanleitfläche 160 begrenzt sind und an deren Boden eine nutartige Vertiefung 170 vorgesehen ist. Die in Achsrichtung schmäleren parallelflankig begrenzten Fortsätze 190 zwischen benachbarten Spanraumausnehmungen 150 tragen Kassetten 210, die auf ihrer Rückseite mit einer radial durchgehenden parallelflankig begrenzten Nut 290 (Fig. 11) versehen sind, welche den zugehörigen stegartigen Fortsatz 190 aufnimmt (Fig. 11). Die Kassetten 210 ragen mit ihrem Unterteil 300 in die nutartigen Vertiefungen 170, in denen sie kippsicher radial abgestützt sind, während sie in Umfangsrichtung an der Abstützfläche 180 des jeweils zugeordneten Fortsatzes 190 anliegen. Die grundsätzlich ähnlich wie in Fig. 5 angeordnete Zylinderkopfschraube 310 dient in entsprechender Weise zur Befestigung an dem Werkzeugkörper 130.

Die formschlüssige Halterung der Kassetten 210 an dem Werkzeugkörper 130 ist somit gleich wie jene der Kassetten 21 an dem Werkzeugkörper 13, so daß gegebenenfalls für beide Scheibenfräser 12, 43 mit einem gleichen Werkzeugkörper 13 (oder 130) das Auslangen gefunden werden kann.

Auch bei dem Scheibenfräser 43 sind in Umfangsrichtung aufeinanderfolgende Kassetten 210 jeweils mit einer unterschiedlichen Wendeplattenbestückung ausgerüstet. Die eine mit 210a bezeichnete Kassette jedes Kassettenpaares trägt an ihrem Umfang eine quadratische, in tangentialer Einbaulage symmetrisch zu der Mittelebene des Werkzeugkörpers 130 angeordnete Wendeschneidplatte 44, deren wirksame Hauptschneide mit 45 (Fig. 11) bezeichnet ist. Die Hauptschneide 45 ist - ähnlich wie bei der Wendeschneidplatte 33 nach Fig. 7 - kürzer als die Schnittbreite. Sie arbeitet mit negativer Schneidengeometrie (vgl. Fig. 9). Ihr axialer Einstellwinkel ist, wie bei der Wendeschneidplatte 24 0°.

Die andere Kassette 210b des Kassettenpaares ist im Bereiche ihres Umfanges mit zwei Wendeschneidplatten 46 bestückt, die symmetrisch zu der Mittelebene des Werkzeugkörpers 130 ebenfalls in tangentialer Einbaulage angeordnet sind. Ihre wirksamen Schneidkanten 47 überlappen sich mit der wirksamen Schneidkante 45 der Wendeschneidplatte 44 der Kassette 210a. Sie sind mit einem von 0° abweichenden Einstellwinkel 48 eingebaut, derart, daß ihre axial außenliegenden wirksamen Schneidecken in Drehrichtung gegenüber den innenliegenden unwirksamen Schneidecken nacheilen.

Damit sind die axial außenliegenden Neben- oder Schlichtschneiden 49 der Wendeschneidplatten 46 freigestellt. Die wirksamen Nebenschneiden 49 ergeben zusammen mit den Hauptschneiden 47 und 45 eine über die Schnittbreite durchgehende Schrupp- und Schlichtschneide, durch die die erste Stufe 5 der Rotornut 2 (Fig. 2) gleichzeitig vorgefräst und im Bereiche der Nutenseitenwände 8 geschlichtet wird.

Bei der Herstellung der Rotornuten 2 wird zunächst mittels des Scheibenfräsers 43 nach den Fig. 9 bis 11 die erste Stufe 5 in einem Schnitt ausgefräst. Dabei werden in einem einzigen Arbeitsgang sowohl die Vorfräs- oder Schruppoperationen durchgeführt als auch die Schlichtoperationen für die Seitenflächen 8 der Nut erledigt. Die Nuttiefe der ersten Stufe 5 hängt von den geometrischen Gegebenheiten ab. Sie beträgt in der Regel ca. ein Drittel bis ein Viertel der Gesamtnuttiefe.

Nach dem Werkzeugwechsel werden mit dem anderen Scheibenfräser 12 in einem einzigen Schnitt gleichzeitig die zweite Stufe 6 und die dritte Stufe 7 der Rotornut 2 erzeugt. Dabei werden durch die Wendeschneidplatten 22, 23, 24 (Fig. 6, 7) die Schruppoperationen über die Breite der dritten Stufe 7 bis zum Nutenboden 11 durchgeführt, während die Nebenschneiden 36 der Wendeschneidplatten 22 die Nutenseitenwände 10 der dritten Stufe 7 schlichten.

Bei diesem Bearbeitungsvorgang führen die radial innenliegenden Wendeschneidplatten 25 die für die gegenüber der dritten Stufe 7 größere Nutbreite in der zweiten Stufe 6 erforderlichen zusätzlichen Schrupparbeiten aus, während die Nebenschneiden 36 der Wendeschneidplatten 25 die Nutenseitenwände 9 in der zweiten Stufe 6 schlichten. Die Wendeschneidplatten 23 erzeugen die Fase am Übergang von der dritten auf die zweite Stufe der Nut 2.

Die großen Spanraumausnehmungen 15 sind so bemessen, daß sie die bei diesen Operationen anfallenden, wegen der großen Schnittbögen anfallenden langen Späne aufnehmen können. Jede Rotornut 2 ist somit mit nur zwei Schnitten, d.h. unter Verwendung von lediglich zwei - noch dazu grundsätzlich ähnlich aufgebauten - Scheibenfräsern genau maßhaltig mit einwandfreier Oberflächenbeschaffenheit der Nutseitenwände hergestellt.

## Patentansprüche

1. Verfahren zum Herstellen tiefer Nuten in metallischen Werkstücken, insbesondere in Generator- und Turbinenrotoren (1), bei dem jede Nut (2) mit Fräswerkzeugen in mehreren aufeinanderfolgenden Schnitten stufenweise ausgefräst wird, dadurch gekennzeichnet, daß die Nuten in lediglich zwei Schnitten ausgefräst werden und daß bei jedem Schnitt gleichzeitig eine Schrupp- und eine Schlichtbearbeitung unter Verwendung nur eines einzigen Fräswerkzeuges vorgenommen wird, das Schrupp- und Schlichtschneiden trägt.

2. Verfahren nach Anspruch 1, dadurch gekennzeichnet, daß bei der Herstellung von gestuften Nuten im ersten und/oder zweiten Schnitt ein gestuftes Nutenprofil ausgefräst wird.

3. Fräswerkzeug in Gestalt eine wendeplattenbestückten Scheibenfräsers (12, 120) zur Durchführung des Verfahrens nach einem der vorhergehenden Ansprüche,
- mit einem kreisscheibenförmigen Werkzeugkörper (13, 130), der mit Spanräumen (15, 150) ausgebildet und mit Kassetten (21, 210), die jeweils mit in Sitzen (27) aufgenommenen Wendeschneidplatten bestückt sind und die im Bereiche der Spanräume lagegenau an dem Werkzeugkörper befestigt sind,
- mit Wendeschneidplatten (22, 24, 25; 44, 46), die wenigstens eine Haupt- oder Schruppschneide (35, 33, 45, 47) und
- mit Wendeschneidplatten (22, 25; 46), die wenigstens eine Neben- oder Schlichtschneide (36; 49) aufweisen, wobei die Schnittbreite auf die Hauptschneiden der Wendeschneidplatten wenigstens zweier in Drehrichtung aufeinanderfolgend angeordneter Kassetten (21a, 21b; 210a, 210b) mit unterschiedlicher Wendeplattenbestückung aufgeteilt ist und die die Schnittbreite begrenzenden Wendeschneidplatten (22, 25; 46) wenigstens einer dieser Kassetten anschließend an die Hauptschneide jeweils eine axial nach außen weisende wirksame Nebenschneide (36; 49) aufweisen, derart, daß durch die Haupt- und Nebenschneiden der Wendeschneidplatten dieser Kassetten (21a, 21b; 210a, 210b) eine komplette Schrupp- und Schlichtschneide gebildet ist.

4. Fräswerkzeug nach Anspruch 3, dadurch gekennzeichnet, daß die Kassetten (21, 210) an dem Werkzeugkörper (13, 130) radial formschlüssig in einer nutförmigen Ausnehmung (17, 170) des Werkzeugkörpers aufgenommen und in dieser radial abgestützt sind.

5. Fräswerkzeug nach Anspruch 3 oder 4, dadurch gekennzeichnet, daß die Kassetten (21, 210) an dem Werkzeugkörper (13, 130) jeweils mittels einer im wesentlichen tangential zu dem Werkzeugkörper (13, 130) verlaufenden Schraube (31) befestigt sind.

6. Fräswerkzeug nach einem der Ansprüche 3 bis 5, dadurch gekennzeichnet, daß die Kassetten (21, 210) an dem Werkzeugkörper (13, 130) in axialer Richtung formschlüssig mittels einer an ihrer Rückseite ausgebildeten Nut (29, 290) und einen in diese eingreifenden Steg (19, 190) des Werkzeugkörpers geführt sind.

7. Fräswerkzeug nach einem der Ansprüche 3 bis 6, dadurch gekennzeichnet, daß von am Werkzeugkörper (13, 130) aufeinanderfolgenden Kassetten (21a, 21b; 210a, 210b) eine Kassette (21a, 210a) eine, bezogen auf die Schnittbreite mittig angeordnete Wendeschneidplatte (24, 44) oder Wendeschneidplattengruppe trägt und wenigstens eine andere Kassette (21b, 210b) mit paarweise axial symmetrisch angeordneten Wendeschneidplatten (22, 25, 46) bestückt ist.

8. Fräswerkzeug nach Anspruch 7, dadurch gekennzeichnet, daß zumindest die mittige Wendeschneidplatte (24, 44) oder Wendeschneidplattengruppe in im wesentlichen tangential zum Umfang des Werkzeugkörpers ausgerichteter Einbaulage angeordnet ist.

9. Fräswerkzeug nach Anspruch 8, dadurch gekennzeichnet, daß die Wendeschneidplatten (46) der anderen Kassette (210b) in im wesentlichen tangential zum Werkzeugkörper (130) ausgerichteter Einbaulage angeordnet sind und im Bereiche ihrer axial außenliegenden Schmalseiten die Nebenschneiden (49) tragen.

10. Fräswerkzeug nach Anspruch 9, dadurch gekennzeichnet, daß die beiden Wendeschneidplatten (46) jeweils mit einem axialen Einstellwinkel > 0° eingebaut sind.

11. Fräswerkzeug nach Anspruch 8, dadurch gekennzeichnet, daß die beiden endständigen Wendeschneidplatten (22) in im wesentlichen radial zum Werkzeugkörper (13) ausgerichteter Einbaulage angeordnet sind.

12. Fräswerkzeug nach einem der Ansprüche 7 bis 11, dadurch gekennzeichnet, daß an wenigstens einer der beiden Kassetten (21a, 21b) ein zusätzliches Paar axial symmetrisch angeordneter Wendeschneidplatten (23; 25) im radialen Abstand von der Hauptschneide oder von den Hauptschneiden (33; 35) der anderen Wendeschneidplatte (24) oder Wendeschneidplatten (22) vorgesehen ist.

13. Fräswerkzeug nach Anspruch 12, dadurch gekennzeichnet, daß das zusätzliche Wendeschneidplattenpaar (23) mit seinen Hauptschneiden (42) unter einem Einstellwinkel von > 0°, vorzugsweise von 30° angeordnet und zur Herstellung zweier Fasen eingerichtet ist.

14. Fräswerkzeug nach Anspruch 12, dadurch gekennzeichnet, daß das zusätzliche Wendeschneidplattenpaar (25) mit seitlich angeordneten Nebenschneiden (36) in im wesentlichen radialer Einbaulage angeordnet ist.

15. Fräswerkzeug nach einem der Ansprüche 3 bis 14, dadurch gekennzeichnet, daß Nutenseitenflächen (9, 10) erzeugende Wendeschneidplatten (22, 25) jeweils mit einem an die Nebenschneide (36) sich anschließenden Radius (37), der in die Haupt Schneide (35) übergeht, ausgebildet sind.

16. Fräswerkzeug nach Anspruch 15, dadurch gekennzeichnet, daß die Wendeschneidplatten (22, 25) an der Freifläche (39) der Nebenschneide (36) einen an die Nebenschneide (36) anschließenden Bereich (40) mit einem Freiwinkel aufweisen, der 0° beträgt oder zumindest kleiner ist als der Freiwinkel des sich zur Grundfläche der Wendeschneidplatte hin anschließenden Bereiches (Fig. 8).

## Claims

1. Process for the production of deep grooves in metallic work pieces, in particular in generator and turbine rotors (1), in which each groove (2) is milled out in steps with milling tools in several consecutive cuts, characterised in that the grooves are milled out in only two cuts, and that with each cut a roughing and finishing operation is simultaneously performed using only a single milling tool bearing roughing and finishing cutting edges.

2. Process according to Claim 1, characterised in that in the production of stepped grooves a stepped groove profile is milled out in the first and/or second cut.

3. Milling tool in the form of a disc cutter fitted with reversible cutting blades (12, 120) for carrying out the process according to one of the preceding claims,
- with a circular disc-shaped tool body (13, 130), which is constructed with chip spaces (15, 150) and cassettes (21, 210), which are respectively fitted with reversible cutting blades in seats (27) and are fastened in exact position on the tool body in the region of the chip spaces,
- with reversible cutting blades (22, 24, 25; 44, 46) with at least one main or roughing cutting edge (35, 33, 45, 47) and
- with reversible cutting blades (22, 25; 46) having at least one secondary or finishing cutting edge (36; 49), whereby the cutting width is divided over the main cutting blades of the reversible cutting blades of at least two cassettes (21a, 21b; 210a, 210b) arranged one after the other in the direction of rotation with different reversible blade assembly, and the reversible cutting blades (22, 25; 46) defining the cutting width of at least one of these cassettes connecting to the main cutting edge respectively have an axially outward pointing secondary cutting edge (36; 49), such that a complete roughing and finishing cutting edge is formed by the main and secondary cutting edges of the reversible cutting blades of these cassettes (21a, 21b; 210a, 210b).

4. Milling tool according to Claim 3, characterised in that the cassettes (21, 210) are housed radially positively on the tool body (13, 130) in a groove-shaped recess (17, 170) of the tool body and supported radially therein.

5. Milling tool according to Claim 3 or 4, characterised in that the cassettes (21, 210) are respectively fastened on the tool body (13, 130) by means of a screw (31) running essentially tangentially to the tool body (13, 130).

6. Milling tool according to one of Claims 3 to 5, characterised in that the cassettes (21, 210) are guided positively on the tool body (13, 130) in axial direction by means of a groove (29, 290) constructed on their rear side and a web (19, 190) of the tool body engaging in this.

7. Milling tool according to one of Claims 3 to 6, characterised in that of cassettes (21a, 21b; 210a, 210b) arranged one after the other on the tool body (13, 130), one cassette (21a, 21b) bears - in relation to the cutting width - a centrally arranged reversible cutting blade (24, 44), or reversible cutting blade group, and at least one other cassette (21b, 210b) is fitted with reversible cutting blades (22, 25, 46) arranged axially symmetrically in pairs.

8. Milling tool according to Claim 8, characterised in that at least the central reversible cutting blade (24, 44) or reversible cutting blade group is arranged in an installation position oriented essentially tangentially to the periphery of the tool body.

9. Milling tool according to Claim 8, characterised in that the reversible cutting blades (46) of the other cassette (210b) are arranged in an installation position oriented essentially tangentially to the tool body (130), and in the region of their axially outer narrow sides support the secondary cutting edges (49).

10. Milling tool according to Claim 9, characterised in that the two reversible cutting blades (46) are respectively installed with an axial setting angle of > 0°.

11. Milling tool according to Claim 8, characterised in that the two end reversible cutting blades (22) are arranged in an installation position oriented essentially radially to the tool body (13).

12. Milling tool according to one of Claims 7 to 11, characterised in that on at least one of the two cassettes (21a, 21b), an additional pair of axially symmetrically arranged reversible cutting blades (23; 25) is provided at a radial distance from the main cutting edge or from the main cutting edges (33; 35) of the other reversible cutting blade (24) or reversible cutting blades (22).

13. Milling tool according to Claim 12, characterised in that the additional pair of reversible cutting blades (23) is arranged with its main cutting edges (42) at a setting angle of >0°, preferably 30°, and is fitted for the production of two chamfers.

14. Milling tool according to Claim 12, characterised in that the additional pair of reversible cutting blades (25) with laterally arranged secondary cutting edges (36) is arranged in an essentially radial installation position.

15. Milling tool according to one of Claims 3 to 14, characterised in that reversible cutting blades (22, 25) producing groove side surfaces (9, 10) are respectively constructed with a radius (37) adjoining the secondary cutting edge (36) and merging into the main cutting edge (35).

16. Milling tool according to Claim 15, characterised in that on the relief flank (39) of the secondary cutting edge (36), the reversible cutting blades (22, 25) have a region (40) adjoining the secondary cutting edge (36) with a relief angle, which amounts to 0° or is at least smaller than the relief angle of the region joining on to the area of the reversible cutting blade (Figure 8)

## Revendications

1. Procédé de réalisation de rainures profondes dans des pièces métalliques, en particulier des rotors d'alternateurs et de turbines (1), suivant lequel chaque rainure (2) est fraisée progressivement en plusieurs étapes successives à l'aide d'outils de fraisage, caractérisé par le fait que les rainures sont fraisées en deux étapes seulement et qu'à chaque étape, on effectue simultanément un ébauchage et une finition en utilisant un seul outil de fraisage portant des arêtes d'ébauchage et des arêtes de finition.

2. Procédé suivant la revendication 1, caractérisé par le fait que lors de la réalisation de rainures étagées, on fraise un profil de rainure étagé dans la première étape et/ou dans la deuxième étape.

3. Outil de fraisage sous la forme d'une fraise-disque (12, 120) équipée de plaquettes de coupe amovibles à arêtes multiples pour la mise en oeuvre du procédé suivant l'une des revendications précédentes, comprenant
- un corps d'outil (13, 130) en forme de disque circulaire comportant des espaces de dégagement de copeaux (15, 150), et des cassettes (21, 210) qui sont équipées de plaquettes de coupe amovibles à arêtes multiples positionnées dans des logements (27) et fixées en position correcte sur le corps d'outil dans la zone des espaces de dégagement de copeaux,
- des plaquettes de coupe amovibles (22, 24, 25; 44, 46) présentant au moins une arête principale ou d'ébauchage (35, 33, 45, 47), et
- des plaquettes de coupe amovibles (22, 25; 46) présentant au moins une arête secondaire ou de finition (36; 49), la largeur de coupe étant répartie sur les arêtes principales des plaquettes de coupe amovibles d'au moins deux cassettes (21a, 21b; 210a, 210b) se succédant dans le sens de rotation et équipées de plaquettes de coupe amovibles différentes, les plaquettes de coupe amovibles (22, 25; 46) d'au moins l'une de ces cassettes, qui limite la largeur de coupe, présentant à la suite de l'arête principale respectivement une arête secondaire (36; 49) utile, dirigée axialement vers l'extérieur, de telle manière que les arêtes principales et secondaires des plaquettes de coupe amovibles de ces cassettes (21a, 21b; 210a, 210b) forment une arête de d'ébauchage et de finition complète.

4. Outil de fraisage suivant la revendication 3, caractérisé par le fait que les cassettes (21, 210) sont logées sur le corps d'outil (13, 130) radialement par complémentarité de forme dans un évidement (17, 170) en forme de rainure du corps d'outil et sont soutenues radialement dans cet évidement.

5. Outil de fraisage suivant la revendication 3 ou 4, caractérisé par le fait que les cassettes (21, 210) sont fixées au corps d'outil (13, 130) respectivement à l'aide d'une vis (31) s'étendant essentiellement tangentiellement au corps d'outil (13, 130).

6. Outil de fraisage suivant l'une des revendications 3 à 5, caractérisé par le fait que les cassettes (21, 210) sont guidées sur le corps d'outil (13, 130) en direction axiale par complémentarité de forme au moyen d'une rainure (29, 290) formée sur leur côté arrière, et d'une nervure (19, 190) du corps d'outil, engagée dans ladite rainure.

7. Outil de fraisage suivant l'une des revendications 3 à 6, caractérisé par le fait que parmi les cassettes (21a, 21b; 210a, 210b) qui se succèdent sur le corps d'outil (13, 130), une cassette (21a, 210a) porte une plaquette de coupe amovible (24, 44) ou un groupe de plaquettes de coupe amovibles en position médiane par rapport à la largeur de coupe et au moins une autre cassette (21b, 210b) est équipée de plaquettes de coupe amovibles (22, 25, 46) disposées de façon axialement symétrique par paires.

8. Outil de fraisage suivant la revendication 7, caractérisé par le fait qu'au moins la plaquette de coupe amovible (24, 44) ou le groupe de plaquettes de coupe amovibles se trouvant en position médiane est disposé dans une position de montage orientée essentiellement tangentiellement à la périphérie du corps d'outil.

9. Outil de fraisage suivant la revendication 8, caractérisé par le fait que les plaquettes de coupe amovibles (46) de l'autre cassette (210b) sont disposées en position de montage orientée essentiellement tangentiellement au corps d'outil (130) et portent les arêtes secondaires (49) dans la zone de leurs côtés étroits situés axialement à l'extérieur.

10. Outil de fraisage suivant la revendication 8, caractérisé par le fait que les deux plaquettes de coupe amovibles (46) sont montées respectivement avec un angle d'incidence axial > 0 °.

11. Outil de fraisage suivant la revendication 8, caractérisé par le fait que les deux plaquettes de coupe amovibles (22) en position d'extrémité sont disposées dans une position de montage orientée essentiellement radialement par rapport au corps d'outil (13).

12. Outil de fraisage suivant l'une des revendications 7 à 11, caractérisé par le fait qu'au moins l'une des deux cassettes (21a, 21b) présente une paire supplémentaire de plaquettes de coupe amovibles (23, 25) disposée de façon axialement symétrique, à distance radiale de l'arête principale ou des arêtes principales (33; 35) de l'autre plaquette de coupe amovible (24) ou des autres plaquettes de coupe amovibles (22).

13. Outil de fraisage suivant la revendication 12, caractérisé par le fait que la paire supplémentaire de plaquettes de coupe amovibles (23) est disposée avec ses arêtes principales (42) sous un angle d'incidence supérieur à 0 °, de préférence un angle d'incidence de 30 °, et est arrangée pour la réalisation de deux facettes.

14. Outil de fraisage suivant la revendication 12, caractérisé par le fait que la paire supplémentaire d'arêtes de coupe (25) est disposée avec des arêtes secondaires (36) disposées latéralement dans une position de montage essentiellement radiale.

15. Outil de fraisage suivant l'une des revendications 3 à 14, caractérisé par le fait que les plaquettes de coupe amovibles (22, 25) produisant des faces latérales (9, 10) de rainures sont réalisées avec un rayon (37) entre l'arête secondaire (36) et l'arête principale (35).

16. Outil de fraisage suivant la revendication 15, caractérisé par le fait que les plaquettes de coupe amovibles (22, 25) présentent, sur la face de dépouille (39) de l'arête secondaire (36), une zone (40) se raccordant à l'arête secondaire (36) et présentant un angle de dépouille qui s'élève à 0 ° ou tout au moins est inférieur à l'angle de dépouille de la zone qui s'y raccorde vers la surface de base de la plaquette de coupe amovible (figure 8).
